(19) Europäisches Patentamt
European Patent Office
Office européen des brevets

(11) EP 3 107 966 B1

(12) **EUROPÄISCHE PATENTSCHRIFT**

(45) Veröffentlichungstag und Bekanntmachung des Hinweises auf die Patenterteilung:
**24.01.2018 Patentblatt 2018/04**

(21) Anmeldenummer: **15705942.9**

(22) Anmeldetag: **10.02.2015**

(51) Int Cl.:
***C08L 83/08*** *(2006.01)*

(86) Internationale Anmeldenummer:
**PCT/EP2015/052772**

(87) Internationale Veröffentlichungsnummer:
**WO 2015/121261 (20.08.2015 Gazette 2015/33)**

(54) **VERNETZBARE MISCHUNGEN MIT ALPHA-FUNKTIONELLEN POLYSILOXANEN**

CROSS-LINKABLE MIXTURES HAVING ALPHA-FUNCTIONAL POLYSILOXANES

MÉLANGES RÉTICULABLES CONTENANT DES POLYSILOXANES ALPHA-FONCTIONNELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2014 DE 102014202858**

(43) Veröffentlichungstag der Anmeldung:
**28.12.2016 Patentblatt 2016/52**

(73) Patentinhaber: **Wacker Chemie AG**
**81737 München (DE)**

(72) Erfinder:
- **STEPP, Michael**
**A-5122 Überackern (AT)**
- **ACHENBACH, Frank**
**84359 Simbach (DE)**
- **KOELLNBERGER, Andreas**
**84375 Kirchdorf (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A1- 1 818 368**
**US-A- 5 500 300**
**US-A1- 2003 176 614**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft zu Vulkanisaten vernetzbare Abmischungen, welche über Methylengruppen gebundene polare Gruppen enthalten und deren Vulkanisate sich durch hohe relative Permittivitäten bei hohen elektrischen Durchschlagfestigkeiten auszeichnen.

Für dielektrische Elastomere gibt es für die Anwendung in Aktoren, Generatoren oder Sensoren in der Robotik, der Orthopädie und anderen Gebieten Bedarf an elektrisch kontrollierbaren "künstliche Muskeln", Wandler, die aus Bewegungsenergie Strom erzeugen sowie Sensoren. Intelligente Konstruktionen, wie Minimalenergieaktoren oder Stapelaktoren mit sehr kleinen Schichtdicken, sind erforderlich, um die bestmögliche Leistungscharakteristik zu erhalten. Es besteht ein großes Interesse an elektroaktiven Polymeraktoren, die elektrische Energie in lineare mechanische Bewegung umwandeln können. Obwohl bereits Aktoren entwickelt wurden, die Auslenkungen von mehr als 100 Prozent vollführen konnten, sind jedoch verlässliche und wiederholbare relative Dehnungen von 10 bis 30 Prozent der derzeitige Stand der Wissenschaft. Auch diese relativen Dehnungen benötigen eine Betriebsspannung von mehreren tausend Volt. Aufgrund dieser hohen Betriebsspannungen, die unpraktisch und unsicher sind, forschen Wissenschaftler nach Materialien, die auch bei niedrigeren Spannungen betrieben werden können. Die Aktivität eines Aktors kann verbessert werden, indem seine Fähigkeit zur Speicherung der elektrischen Energiedichte verbessert wird. Dies entspricht der Erhöhung der Permittivität $\varepsilon_r$ des aktiven Materials. Viele Ansätze führten zu einer Verschlechterung der mechanischen Eigenschaften und erniedrigten Durchbruchsfeldstärken, oberhalb derer das Material einen katastrophalen elektrischen Durchbruch erleidet.

Dielektrische Elastomere sind als Basismaterialien für künstliche Muskeln und Aktorikanwendungen geeignet. Als mögliche Materialklassen werden hauptsächlich Polyurethan(PU)- und Polydimethylsiloxan(PDMS)-Elastomere diskutiert. Durch die Vielzahl für die PU- und PDMS-Synthese geeigneter Basisstrukturen lassen sich die mechanischen Eigenschaften der genannten Polymere an die Anforderungen künstlicher Muskeln und Aktorikelemente gut anpassen. Die Permittivität der genannten Polymerstrukturen ist jedoch in der Regel auf Werte von etwa 3 bis 10 beschränkt. Dadurch ergeben sich für aus diesen Materialien gefertigte künstliche Muskeln und Aktorikelemente Schaltspannungen von in der Regel> 1 kV. Diese hohen Schaltspannungen setzen der Anwendbarkeit dieser Technologie enge Grenzen. Daher sind verschiedene technische Vorschläge und Lösungen unterbreitet worden, die zu einer deutlichen Anhebung der Permittivität führen. So kann durch Blenden der genannten Polymere mit Nanopartikeln hochpermittiver anorganischer Materialien, wie Bariumtitanat, Bleizirkonat, Titandioxid u. a., die Permittivität der Elastomere deutlich erhöht werden, so dass niedrigere Schaltspannungen von einigen hundert Volt erreicht werden können. Diese Lösungen beinhalten jedoch deutliche Nachteile, die in einer wesentlichen Verschlechterung der Verarbeitungseigenschaften, in einer Veränderung der mechanischen Eigenschaften der Elastomere (Versteifung) und in Problemen der homogenen Verteilung der Nanopartikel in der Elastomermatrix liegen. Nanopartikel können aggregieren, agglomerieren und zu Problemen bei der Bildung homogener Elastomerfilme führen. Weiterhin sind Nanopartikel der genannten anorganischen Materialien durch ihre hohe innere Oberfläche in der Regel hochreaktiv und können somit zu einer Destrukturierung oder einer Schädigung der Elastomermatrix führen. Weiterhin stellen die Wechselwirkungen an der Grenzfläche Nanopartikel/Elastomermatrix ein häufiges, nicht einfach zu lösendes Problem bei der Anwendung von Nanopartikeln zur Erhöhung der Permittivität von dielektrischen Elastomeren dar. Aktoren, die aus weichen dielektrischen Elastomeren bestehen, verformen sich aufgrund des Maxwelldrucks $\sigma$(Maxwell), der vom elektrischen Feld induziert wird und mit den mechanischen Eigenschaften des Materials wechselwirkt.

$$s_z = \frac{\sigma_{Maxwell}}{E} = \frac{\varepsilon_0 \varepsilon_r E_b^2}{E} = \frac{\varepsilon_0 \varepsilon_r \left(\frac{U_b}{d}\right)^2}{E}$$

Hierbei sind $s_z$ die maximale Verformung in z-Richtung, $\sigma$(Maxwell) der elektrostatische Druck von den Elektroden, E der Elastizitätsmodul des Materials, $\varepsilon_0$ die Permittivität des Vakuums, $\varepsilon_r$ die relative Permittivität des Materials, $E_b$ die Durchbruchsfeldstärke, $U_b$ die Durchbruchsspannung und d die Dicke des aktiven Materials. Aus der oberen Gleichung kann entnommen werden, dass zum Erreichen großer Dehnungen und niedriger Spannungen die relative Permittivität erhöht und der Elastizitätsmodul reduziert werden muss. Die Dicke des elektrischen Films kann ebenfalls reduziert werden, wird jedoch durch die technischen Möglichkeiten eingeschränkt. Die zurzeit geringste Schichtdicke, die zu Aktorikzwecken verwirklicht wurde, liegt bei ungefähr 5 $\mu$m.
DE 10 2010 046 343 beschreibt, dass die bisherigen Versuche zur Erhöhung der relativen Permittivität in Elastomeren durch Hinzufügen von Additiven nur schwer zu realisieren und mit großen Nachteilen behaftet waren.
Dielektrische Elastomeraktoren (DEA) sind elektroaktive Polymere, die sich durch das Anlegen einer Aktivierungsspannung stark verformen können. Daher werden sie auch oft als "künstliche Muskeln" bezeichnet. Diese Bauteile (beispielsweise beschrieben in US 6,545,384 B1), bestehen im einfachsten Fall aus einem elastischen Dielektrikum mit der Dicke d, das sich zwischen zwei dehnbaren Elektroden befindet. Diese Technologie hat viele praktische Vorteile gegenüber konventionellen Aktoren:

- hohe spezifische elektromechanische Energie,
- deformationsbasierte Bewegung und dadurch kontinuierliche, ruckelfreie Auslenkung,
- geräuschlos,
- hohe Effizienz durch die direkte Kopplung an das Spannungssignal, sowie
- weiche Materialien und dadurch geringe Empfindlichkeit gegenüber Stößen.

Diese dielektrischen Elastomerwandler können aufgrund Ihres Funktionsprinzips ebenfalls in der Sensorik und beim sog. "Energy-Harvesting" eingesetzt werden. Beide Anwendungsfelder haben ein großes Potential. Besonders in der Sensorik gibt es viele verschiedene Anwendungen, die marktreif sind.
Die derzeitigen Nachteile dieser Aktorsysteme sind die hohen Betriebsspannungen von mehreren tausend Volt. Aus diesem Grund werden Materialien mit hoher Permittivität $\varepsilon_r$, hoher Durchbruchsfeldstärke $E_b$ und niedrigem Elastizitätsmodul E gesucht, um die maximale Ausdehnung $s_z$ zu erhöhen und die Betriebsspannung U zu erniedrigen.
Ausgehend hiervon ist es daher Aufgabe der vorliegenden Erfindung, ein als Dielektrikum geeignetes Polymermaterial mit einer hohen relativen Permittivität und hoher Durchschlagfestigkeit (Durchbruchsfeldstärke) bereitzustellen, das einfach und kostengünstig zugänglich ist. Es soll darüber hinaus eine hohe Medienbeständigkeit besitzen, um möglichst vielfältige Anwendungen bedienen zu können.
Polydiorganosiloxane mit polaren funktionellen Gruppen wurden bereits als potenziell geeignete Kandidaten erkannt. Beispielsweise sind in DE 10 2010 046 343 sehr aufwändig herstellbare Siloxan-Additive zur Anhebung der relativen Permittivität in (additionsvernetzenden) Siliconmischungen beschrieben. JP 49080599 zeigt auf, dass Chlormethylmethylsiloxaneinheiten in linearen Siloxanen zu einer deutlichen Anhebung der relativen Permittivtät auf bis zu 6,2 (50 Hz) bei gleichzeitig hoher Durchschlagsfestigkeit (41 kV bei 2,5 mm) führen. Das Dokument US 2013/253146 ist nach dielektrische Elastomere für Aktoren, Generatoren oder Sensoren in z.B. der Robotik oder der Orthopädie gerichtet, und schlägt die Verwendung von Polysiloxane mit Dipolgruppen vor.
Gegenstand der Erfindung sind zu Vulkanisaten vernetzbare Abmischungen, die mindestens eine Verbindung enthalten, die mindestens eine Einheit der allgemeinen Formel 1

$$R^1_aR^2_bSiO_{(4-a-b)/2} \qquad (1)$$

enthält, wobei

**$R^1$** einen einwertigen $C_1$-$C_{20}$-Kohlenwasserstoffrest,
**$R^2$** einen Rest $-CR^3R^4-X$ und
**X** einen Rest -Br, -I, -CN, oder $NO_2$-bedeuten,
**$R^3$, $R^4$** Wasserstoff bedeuten, oder die gleiche Bedeutung haben wie **$R^1$,**
**a** die Werte 0, 1 oder 2,
**b** die Werte 1, 2 oder 3,
**c** und **d** die Werte 0 oder 1 und'
**e** die Werte 0 oder 1 bedeuten,
mit der Maßgabe, dass **a** + **b** $\leq$ 3,
die Verbindung (A) und Verbindung (B) enthalten, wobei Verbindung (A) mindestens zwei aliphatisch ungesättigte Reste aufweist und (B) mindestens drei Si-gebundene Wasserstoffatome aufweist,

Es war deshalb überraschend und nicht vorhersehbar, dass Vulkanisate der vernetzbaren Abmischungen die mindestens eine Verbindung enthalten, die Einheiten der allgemeinen Formel 1 enthält, mehr als 50-fach höhere relative Permittivitätswerte aufweisen als die eingesetzten Basispolymere und die sich außerdem durch eine sehr hohe Beständigkeit gegenüber Medien, wie Lösungsmittel und wässrige Lösungen auszeichnen.
Die Verbindungen, die mindestens eine Einheit der allgemeinen Formel 1 enthalten, werden als alpha-funktionelle Polysiloxane bezeichnet.
Vorzugsweise sind in den zu Vulkanisaten vernetzbaren Abmischungen mindestens 10%, besonders bevorzugt mindestens 20 %, insbesondere 30% aller in der Abmischung vorhandenen Siloxaneinheiten Einheiten der allgemeinen Formel (1).
Beispiele für **$R^1$** sind Alkyl (z.B. Methyl, Ethyl, n-Propyl, i-Propyl, n-Butyl, i-Butyl-, s-Butyl, t-Butyl, 1-Pentyl, 2-Pentyl, 1-Hexyl, 1-Octyl, 1-Hexadecyl), Cycloalkyl, (z.B. Cyclopentyl, Cyclohexyl), Alkenyl (z.B. Vinyl, 2-Propenyl, Allyl, 3-Butenyl, 5-Hexenyl, 10-Decenyl), Cycloalkenyl- (z.B. 2-Cyclohexenyl, 3-Cyclohexenyl, Cyclopentadienyl), Aryl (z.B.

Phenyl, Naphthyl), Alkylaryl- (z.B. 2-Phenylethyl, 1-Phenylethyl), Alkaryl- (z.B. Tolyl), wobei der Methylrest vorzugsweise für > 30% / besonders bevorzugt > 50% / insbesondere > 60% aller Reste $\mathbf{R^1}$ steht.

$\mathbf{R^1}$ weist vorzugsweise 1 bis 6 Kohlenstoffatome auf. Insbesondere bevorzugt sind Methyl- und Phenylrest.

$\mathbf{R^3}$ und $\mathbf{R^4}$ bedeuten vorzugsweise unabhängig voneinander jeweils einen Wasserstoffrest oder $C_1$-$C_6$-Alkylreste, insbesondere den Methylrest, wobei der Wasserstoffrest besonders bevorzugt ist.

Beispiele für Einheiten der allgemeinen Formel 1 sind: $I-CH_2-SiO_{3/2}$, $I-CH_2-SiCH_3O_{2/2}$, $I-CH_2-Si(CH_3)_2O_{1/2}$, $O_2N-CH_2-SiO_{3/2}$, $O_2N-SiCH_3O_{2/2}$, $O_2N-CH_2-Si(CH_3)_2O_{1/2}$, $NC-CH_2-SiO_{3/2}$, $NC-CH_2-SiCH_3O_{2/2}$, $NC-CH_2-Si(CH_3)_2O_{1/2}$, $NC-CH(CH_3)-SiO_{3/2}$, $NC-CH(CH_3)-SiCH_3O_{2/2}$, $NC(CH_3)-CH_2-Si(CH_3)_2O_{1/2}$.

Bevorzugt sind die zu Vulkanisaten vernetzbaren Abmischungen über Hydrosilylierung vernetzbar.
Bei den erfindungsgemäßen Abmischungen kann es sich um Einkomponenten-Siliconabmischungen wie auch um Zweikomponenten-Siliconabmischungen handeln. In letzterem Fall können die beiden Komponenten der erfindungsgemäßen Abmischungen alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator, also im Wesentlichen nicht gleichzeitig die Bestandteile (A), (B) und (D) bzw. (C) und (D1) bzw. (D2) enthält.
Die in den erfindungsgemäßen Abmischungen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) oder zusätzlich wird Siloxan (C) eingesetzt, welches mindestens drei Reste aufweist, die ausgewählt werden aus aliphatisch ungesättigten Resten und Si-gebundenem Wasserstoffatom.
Auch sind Mischungen aus (A) und (B) und (C) mit den oben genannten Verhältnissen von aliphatisch ungesättigten Resten und Si-gebundenen Wasserstoffatomen möglich. Komponente (D1) bzw. (D2) ist eine die Vernetzung fördernde Komponente.

Vorzugsweise sind die Bestandteile der erfindungsgemäßen Mischung miteinander mischbar. Dies lässt sich vorzugsweise durch Anpassung der Polarität d.h. ähnliche Konzentration an Einheiten der allgemeinen Formel (1) erreichen oder durch Einsatz eines Lösungsvermittlers oder Lösemittels, mit dem die Komponenten verträglich sind.

Bei der erfindungsgemäß eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um deren Mischungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykoldiacrylat, Polyethylenglykol Dimethacrylat, Poly(propylenglykol)methacrylat.

Vorzugsweise enthalten die erfindungsgemäßen Siliconabmischungen als Bestandteil (A) mindestens eine aliphatisch ungesättigte Organosiliciumverbindung, wobei alle bisher in additionsvernetzenden Abmischungen verwendeten, aliphatisch ungesättigten Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen, vorzugsweise aber aliphatisch ungesättigte Organosiliciumverbindungen, die mindestens eine Einheit der allgemeinen Formel (1) enthalten.

Als Organosiliciumverbindungen (A), die SiC-gebundene Reste mit aliphatischen Kohlenstoff-Kohlenstoff-Mehrfachbindungen aufweisen, werden vorzugsweise lineare, oder verzweigte Organopolysiloxane aus Einheiten der allgemeinen Formel (2)

$$R^{20}_fR^{21}_gSiO_{(4-f-g)/2} \qquad (2)$$

eingesetzt, wobei

- $\mathbf{R^{20}}$ einen einwertigen oder mehrwertigen Rest $\mathbf{R^a}$ oder $\mathbf{R^b}$,
- $\mathbf{R^{21}}$ einen einwertigen, SiC-gebundenen Kohlenwasserstoffrest mit mindestens einer aliphatischen Kohlenstoff-Kohlenstoff-Mehrfachbindung,
- $\mathbf{R^a}$ einen von aliphatischen Kohlenstoff-Kohlenstoff-Mehrfachbindungen freien, einwertigen $C_1$-$C_{18}$-Kohlen-

wasserstoffrest,

**$R^b$** einen Rest der allgemeinen Formel (3) $-(Q^b)-Y$, (3)

**$Q^b$** einen unsubstituierten oder substituierten zweiwertigen $C_2$-$C_{18}$-Kohlenwasserstoffrest,

**Y** einen Rest F, Cl, Br, I, $CF_3$, OOC-R'OR', $[O(CH_2)_{q1}]_o[OCH(CH_3)(CH_2)_{q2}]_p$-Z, -CN, $-OR^{22}$, $-NR^{22}$-, $-NR^{22}_2$, - $NR^{22}$-C(O)-$NR^{22}_2$, -C(O)-$NR^{22}_2$, -C(O)$R^{22}$, -C(O)O$R^{22}$, $-SO_2$-Ph oder $-C_6F_5$,

**$R^{22}$** unabhängig voneinander, einen einwertigen Kohlenwasserstoffrest mit 1 bis 20 Kohlenstoffatomen,

**Ph** den Phenylrest,

**Z** einen Rest -OH, -O-R' oder -OOC-R',

**R'** die Bedeutung von **$R^a$,**

**f** die Werte 0, 1, 2 oder 3,

**g** die Werte 0, 1 oder 2,

**q1** und **q2** unabhängig voneinander die Werte 1, 2, 3 oder 4 und

**o** und **p** unabhängig voneinander Zahlen von 0 - 80 bedeuten, mit der Maßgabe, dass die Summe **f** + **g** kleiner oder gleich 3 ist,

dass mindestens 2 Reste **$R^{21}$** je Molekül vorliegen, dass zwischen **Y** und dem Si-Atom ein Abstand von mindestens 2 Kohlenstoffatomen besteht und

dass **o + p** $\geq$ 1.

Vorzugsweise enthält Komponente (A) mindestens eine Einheit der allgemeinen Formel (1).

**o** und **p** bedeuten vorzugsweise unabhängig voneinander jeweils Werte von 0 - 36, insbesondere 0 - 12.

Bei Rest **$R^{20}$** kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der allgemeinen Formel (2) miteinander verbinden.

Beispiele für Reste **$R^a$** sind Alkylreste, wie der Methyl-, Ethyl-, n-Propyl-, iso-Propyl-, n-Butyl-, iso-Butyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der $\alpha$- und der $\beta$-Phenylethylrest.

Beispiele für substituierte Reste **$R^b$** sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, $-(CH_2)-N(R^{22})C(O)NR^{22}_2$, $-(CH_2)_q-C(O)NR^{22}_2$, $-(CH_2)_q-C(O)R^{22}$, $-(CH_2)_q-C(O)OR^{22}$, $-(CH_2)_q-C(O)-(CH_2)_rC(O)CH_3$, $-(CH_2)_q-NR^{22}-(CH_2)_r-NR^{22}_2$, - $(CH_2)_q-O-(CH_2)_rCH$ (OH) $CH_2OH$, - $(CH_2)q(OCH_2CH_2)_rOR^{22}$, - $(CH_2)_q-SO_2$-Ph und - $(CH_2)_q-O-C_6F_5$, wobei **$R^{22}$** und **Ph** der oben dafür angegebene Bedeutung entspricht und **q** gleiche oder verschiedene ganze Zahlen zwischen 2 und 10 bedeuten und **r** gleiche oder verschiedene ganze Zahlen zwischen 0 und 10 bedeuten.

Beispiele für **$R^{20}$** für zweiwertige, beidseitig gemäß der allgemeinen Formel (2) Si-gebundene Reste sind solche, die sich von den voranstehend für Rest **$R^{20}$** genannten einwertigen Beispiele dadurch ableiten, dass eine zusätzliche Bindung durch Substitution eines Wasserstoffatoms erfolgt, Beispiele für derartige Reste sind - $(CH_2)$ -, $-CH(CH_3)$-, $-C(CH_3)_2$-, $-CH(CH_3)-CH_2$-, $-C_6H_4$-, $-CH(Ph)-CH_2$-, $-C(CF_3)_2$-, $-(CH_2)_q-C_6H_4-(CH_2)_q$-, - $(CH_2)_q-C_6H_4-C_6H_4-(CH_2)_q$-, $-(CH_2O)_r$, $(CH_2CH_2O)_q$, $-(CH_2)_q-O_x-C_6H_4-SO_2-C_6H_4-O_x-(CH_2)_q$-, wobei **x** 0 oder 1 ist, und **Ph, q** und **r** die voranstehend genannte Bedeutung haben.

Bevorzugt handelt es sich bei Rest **$R^{20}$** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **$R^{21}$** kann es sich um beliebige, einer Anlagerungsreaktion (Hydrosilylierung) mit einer SiHfunktionellen Verbindung zugängliche Gruppen handeln.

Bevorzugt handelt es sich bei Rest **$R^{21}$** um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Octadienyl-, Octatrienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Beispiele und bevorzugte Bedeutungen für **$R^{22}$** sind die Beispiele und bevorzugten Bedeutungen für **$R^{20}$**.

Das Molekulargewicht des Bestandteils (A) kann in weiten Grenzen variieren, bevorzugt zwischen $10^2$ und $10^6$ g/mol, insbesondere zwischen $10^3$ und $10^5$ g/mol. So kann es sich bei dem Bestandteil (A) beispielsweise um ein relativ niedermolekulares alkenylfunktionelles Oligosiloxan, wie, $ViSiMe_2OSiMe_2Vi$ oder $ViSiMe_2-O-SiMe(CH_2Cl)-O-SiMe_2Vi$ handeln, wobei Vi für den Vinylrest und Me für den Methylrest steht, jedoch auch um ein über kettenständige oder

endständige Si-gebundene Vinylgruppen verfügendes hochpolymeres Polydimethylsiloxan, z.B. mit einem Molekulargewicht von $10^5$ g/mol (z.B. als mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel $R^{20}{}_3SiO_{1/2}$, $R^{21}R^{20}{}_2SiO_{1/2}$, $R^{21}{}_2R^{20}SiO_{1/2}$ und $R^{20}{}_2SiO_{2/2}$ zusammengesetzt, wobei **$R^{20}$** und **$R^{21}$** die vorstehend angegebene Bedeutung haben. Verzweigte und netzwerkartige Polysiloxane enthalten zusätzlich trifunktionelle und/oder tetrafunktionelle Einheiten, wobei solche der Formeln $R^{20}SiO_{3/2}$, $R^{21}SiO_{3/2}$ und $SiO_{4/2}$ bevorzugt sind. Selbstverständlich können auch Mischungen unterschiedlicher, den Kriterien des Bestandteils (A) genügender Siloxane eingesetzt werden.

In einer bevorzugten Variante enthält Bestandteil (A) mindestens eine Einheit der allgemeinen Formel (1), besonders bevorzugt sind mindestens 30%, insbesondere 50% aller in der Komponente (A) vorhandenen Siloxaneinheiten Einheiten der allgemeinen Formel (1). Vorzugsweise sind maximal 30% der Siloxaneinheiten der allg. Formel (2) halogensubstituiert, besonders bevorzugt handelt es sich bei den Einheiten der allg. Formel (2) um die Dimethylsiloxy- und die Vinyldimethylsiloxygruppe.

Besonders bevorzugt als Komponente (A) ist die Verwendung vinylfunktioneller Polydiorganosiloxane mit höchstens 0,5 % trifunktionellen und/oder tetrafunktionellen Einheiten mit einer Viskosität von 0,01 bis 1 000 000 Pa•s, besonders bevorzugt von 0,1 bis 200 000 Pa•s, jeweils bei 25°C und einer Scherrate von 5 bei 0,01 und 0,1 Pa•s bis 0,1 1/s bei 1 000 000 und 200 000 Pa•s.

Beispiele für Verbindungen (A) sind:

$ViSiMe_2O-(SiMe_2O)_{21}(SiMe(CH_2Cl)O)_{21}-SiMe_2Vi$
$ViSiMe_2O-(SiMe(CH_2Cl)O)_{218}-SiMe_2Vi$
$ViSiMe_2O-(SiMe_2O)_{75}(SiMe(CH_2Cl)O)_{201}-SiMe_2Vi$
$ViSiMe_2O-(SiMe_2O)_{144}(SiMe(CH_2Cl)O)_{148}-SiMe_2Vi$
$ViSiMe_2O-(SiMe(CH_2Cl)O)_{848}-SiMe_2Vi$
$ViSiMe_2O-(SiMe_2O)_{81}(SiMe(CH_2OMe)O)_{240}-SiMe_2Vi$
$ViSiMe_2O-(SiMe_2O)_{75}(SiMe(CH_2Cl)O)_{25}-SiMe_2Vi$
$ViSiMe_2O-(SiMe_2O)_{140}(SiMe(CH_2Cl)O)_{25}-SiMe_2Vi$
$ViSiMe_2O-(SiMe_2O)_{44}(SiMe(CH_2Cl)O)_{125}(SiMeViO)_8-SiMe_2Vi$
$ViSiMe_2O-(SiMe_2O)_{49}(SiMe(CH_2OMe)O)_{151}(SiMePhO)_{44}-SiMe_2Vi$
$ViSiMe_2O-(SiMe_2O)_{249}(SiMe(CH_2Cl)O)_{644}-SiMe_2Vi$
$ViSiMe_2O-((SiMe_2O)_{22}(SiMe(CH_2Cl)O)_{61}((SiMeO_{3/2})_{12}-SiMe_2Vi$.

Als Organosiliciumverbindung (B) können alle hydrogenfunktionellen Organosiliciumverbindungen eingesetzt werden, die auch bisher in additionsvernetzbaren Abmischungen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der allgemeinen Formel (4)

$$R^{20}{}_hH_iS_iO_{(4-h-i)/2} \quad (4)$$

eingesetzt, wobei

**$R^{20}$** die vorstehend angegebenen Bedeutungen hat,
**h** 0, 1 2 oder 3 ist und
**i** 0, 1 oder 2 ist,

mit der Maßgabe, dass die Summe von **h + i** kleiner oder gleich 3 ist und mindestens zwei Si gebundene Wasserstoffatome je Molekül vorliegen. Vorzugsweise enthält Komponente (B) mindestens eine Einheit der allgemeinen Formel (1).

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen $10^2$ und $10^5$ g/mol. So kann es sich bei dem Bestandteil (B) beispielsweise um ein relativ niedermolekulares SiH-funktionelles Oligosiloxan, wie Tetramethyldisiloxan oder Tetramethylcyclotetrasiloxan handeln, jedoch auch um ein über kettenständig oder endständig SiH-Gruppen verfügendes hochpolymeres Polydiorganylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (B) sind vorzugsweise aus Einheiten der Formel

$R^{20}_3SiO_{1/2}$, $HR^{20}_2SiO_{1/2}$, $HR^{20}SiO_{2/2}$ und $R^{20}_2SiO_{2/2}$ zusammengesetzt, wobei $\mathbf{R^{20}}$ die vorstehend angegebene Bedeutung hat. Verzweigte und netzwerkartige Polysiloxane enthalten zusätzlich trifunktionelle und/oder tetrafunktionelle Einheiten, wobei solche der Formeln $R^{20}SiO_{3/2}$, $HSiO_{3/2}$ und $SiO_{4/2}$ bevorzugt sind, wobei $\mathbf{R^{20}}$ die vorstehend angegebene Bedeutung hat.

Beispiele für Verbindungen (B) sind:

$HSiMe_2O\text{-}(SiMe_{20})_{22}(SiMe(CH_2Cl)O)_{21}(SiMeHO)_{18}\text{-}SiMe_2H$
$SiMe_3O\text{-}(SiMeHO)_{23}(SiMe(CH_2Cl)O)_{44}\text{-}SiMe_3$
$SiMe_3O\text{-}(SiMe_2O)_6(SiMeHO)_{18}(SiMe(CH_2Cl)O)_9\text{-}SiMe_3$
$SiMe_3O\text{-}(SiMeO_{3/2})_2(SiMeHO)_{28}(SiMe(CH_2Cl)O)_{11}\text{-}SiMe_3$
$HSiMe_2O\text{-}(SiMeHO)_{14}(SiMe(CH_2OMe)O)_{21}\text{-}SiMe_2H$

Selbstverständlich können auch Mischungen unterschiedlicher, den Kriterien des Bestandteils (B) genügender Siloxane eingesetzt werden. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer Viskosität bei 25°C von 10 bis 20 000 mPa•s, bei einer Scherrate von 5 bei 10 mPa•s bis 1/s bei 20 000 mPa•s, oder analoge SiH-haltige Verbindungen, bei denen ein Teil der Methylgruppen durch 3,3,3-Trifluorpropyl- oder Phenylgruppen ersetzt ist.

Bevorzugt enthält Bestandteil (B) mindestens eine Einheit der allgemeinen Formel (1), besonders bevorzugt sind mindestens 30%, insbesondere 50% aller in der Komponente (B) vorhandenen Siloxaneinheiten Einheiten der allgemeinen Formel (1).

Vorzugsweise handelt es sich bei der allgemeinen Formel (4) um die Methyl(H)siloxy- und die Dimethylsiloxygruppe.

Bestandteil (B) ist vorzugsweise in einer solchen Menge in den erfindungsgemäßen vernetzbaren Siliconabmischungen enthalten, dass das Molverhältnis von SiH-Gruppen zu aliphatisch ungesättigten Gruppen aus Organosiliciumverbindungen (A) bei 0,1 bis 20, besonders bevorzugt zwischen 0,3 und 2,0 liegt. Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Siliconabmischungen Organopolysiloxane (C), die gleichzeitig aliphatische Kohlenstoff-Kohlenstoff-Mehrfachbindungen und Si-gebundene Wasserstoffatome aufweisen, enthalten. Auch können die erfindungsgemäßen Siliconabmischungen alle drei Komponenten (A), (B) und (C) enthalten.

Falls Siloxane (C) eingesetzt werden, handelt es sich vorzugsweise um solche aus Einheiten der allgemeinen Formeln (2) und (4) mit der Maßgabe, dass je Molekül mindestens 2 Reste $\mathbf{R^{21}}$ und mindestens 2 Si-gebundene Wasserstoffatome vorliegen. Vorzugsweise enthalten die Siloxane (C) mindestens eine Einheit der allgemeinen Formel (1). Wenn die erfindungsgemäßen Siliconabmischungen keine Komponenten (A) und (B) sondern nur Organopolysiloxane (C) enthalten, enthalten die Siloxane (C) mindestens eine Einheit der allgemeinen Formel (1).

Beispiele für Organopolysiloxane (C) sind solche aus $SiO_{4/2}$, $R^{20}_3SiO_{1/2}$-, $R^{20}_2R^{21}SiO_{1/2}$- und $R^{20}_2HSiO_{1/2}$-Einheiten, sogenannte MQ-Harze, wobei diese Harze zusätzlich $R^{20}SiO_{3/2}$-, $R^{21}SiO_{3/2}$-, $HSiO_{3/2}$- und $R^{20}_2SiO$-Einheiten enthalten können, sowie lineare Organopolysiloxane im Wesentlichen bestehend aus $R^{20}_2R^{21}SiO_{1/2}$-, $R^{20}_2SiO$- und $R^{20}HSiO$-Einheiten mit $R^{20}$ und $R^{21}$ gleich der obengenannten Bedeutung.

Bevorzugt enthält Bestandteil (C) mindestens eine Einheit der allgemeinen Formel (1), besonders bevorzugt sind mindestens 20%, insbesondere 30% aller in der Komponente (C) vorhandenen Siloxaneinheiten Einheiten der allgemeinen Formel (1).

Die Organopolysiloxane (C) besitzen vorzugsweise eine durchschnittliche Viskosität von 0,01 bis 500 000 Pa•s, besonders bevorzugt 0,1 bis 100 000 Pa•s jeweils bei 25°C und einer Scherrate von 5 bei 0,01 und 0,1 Pa•s und 0,1 1/s bei 500 000 und 100 000 Pa•s.

Organopolysiloxane (C) sind nach in der Chemie gängigen Methoden herstellbar.

Erfindungsgemäße additionsvernetzende Siliconzusammensetzungen, werden ausgewählt aus der Gruppe enthaltend

- jeweils mindestens eine Verbindung (A), (B) und (D1),
- jeweils mindestens eine Verbindung (C) und (D1), und
- jeweils mindestens eine Verbindung (A), (B), (C) und (D1)
  wobei

  (A) eine organische Verbindung oder eine Siliziumorganische Verbindung, enthaltend mindestens zwei Reste mit aliphatischen Kohlenstoff-Kohlenstoff-Mehrfachbindungen,
  (B) eine siliziumorganische Verbindung, enthaltend mindestens zwei Si-gebundenen Wasserstoffatome,

(C) eine siliziumorganische Verbindung, enthaltend SiC-gebundene Reste mit aliphatischen Kohlenstoff-Kohlenstoff-Mehrfachbindungen und Si- gebundene Wasserstoffatome, und

(D1) ein Hydrosilylierungskatalysator bedeuten,

wobei als Hydrosilylierungskatalysator (D1) alle dem Stand der Technik bekannten Katalysatoren verwendet werden können. Komponente (D1) kann ein Platingruppenmetall sein, beispielsweise Platin, Rhodium, Ruthenium, Palladium, Osmium oder Iridium, eine metallorganische Verbindung davon oder eine Kombination davon. Beispiele für Komponente (D1) sind Verbindungen wie Hexachloroplatin(IV)-säure, Platindichlorid, Platinacetylacetonat und Komplexe der besagten Verbindungen, die in einer Matrix oder einer kernschalenartigen Struktur eingekapselt sind. Zu den Platinkomplexen mit niedrigem Molekulargewicht der Organopolysiloxane gehören 1,3-Diethenyl-1,1,3,3 - Tetramethyldisiloxan-Komplexe mit Platin. Weitere Beispiele sind Platinphosphitkomplexe, Platinphosphinkomplexe oder Alkylplatinkomplexe. Diese Verbindungen können in einer Harzmatrix eingekapselt sein.

Die Konzentration von Komponente (D1) in der vernetzbaren Abmischung ist so bemessen, dass sie zum Katalysieren der Hydrosilylierungsreaktion zwischen den Komponenten (A) und (B) bzw. der Komponente C ausreicht. Die Menge an Komponente (D1) in der vernetzbaren Abmischung kann zwischen 0,1 und 1000 Teile pro Million (ppm), 0,5 und 100 ppm oder 1 und 25 ppm des Platingruppenmetalls betragen. Die Härtungsrate kann gering sein, wenn der Bestandteil des Platingruppenmetalls bei unter 1 ppm liegt. Die Verwendung von mehr als 100 ppm des Platingruppenmetalls ist unwirtschaftlich oder kann die Stabilität der Mischung verringern.

Ebenfalls bevorzugt sind die zu Vulkanisaten vernetzbaren Abmischungen über organische Peroxide (Komponente D2) vernetzbar.

In diesem Fall enthält die Abmischung mindestens die Komponenten (A) und (D2). Dabei sind bevorzugt zwischen 0,1 und 20 Gew.-% Komponente (D2) in den erfindungsgemäßen Abmischungen enthalten. Als Vernetzer im Sinne der Komponente (D2) können alle dem Stand der Technik entsprechenden und typischen Peroxide verwendet werden. Beispiele für die Komponente (D2) sind Dialkylperoxide, wie 2,5-Dimethyl-2,5-di(tert-butylperoxy)hexan, 1,1-Di-(tertbutylperoxy)-cyclohexan, 1,1-Di-(tert -butylperoxy)-3,3,5-trimethylcyclohexan, a-Hydroxyperoxya' -hydroxydicyclohexylperoxid, 3,6-Dicyclohexyliden-1 ,2,4,5-tetroxan, Di-tert-butylperoxid, tert-Butyl-tert-triptylperoxid und tert-Butyl-triethyl-5-methylperoxid, Diaralkylperoxide, wie Dicumylperoxid, Alkylaralkylperoxide, wie tert-Butylcumylperoxid und a,a'-di(tert-Butylperoxi)-m/p-diisopropylbenzol, Alkylacylperoxide, wie t-Butylperbenzoat, und Diacylperoxide, wie Dibenzoylperoxid, Bis-(2-methylbenzoylperoxid), Bis-(4-methylbenzoylperoxid) und Bis-(2,4-dichlorbenzoylperoxid). Bevorzugt ist die Verwendung vinylspezifischer Peroxide, deren wichtigste Vertreter die Dialkyl- und Diaralkylperoxide sind. Besonders bevorzugt ist die Verwendung von 2,5-Dimethyl-2,5-di(tert-butylperoxi)hexan und Dicumylperoxid. Es können einzelne oder Mischungen unterschiedlicher Peroxide (D2) eingesetzt werden. Der Gehalt der erfindungsgemäßen Abmischung an Bestandteil (D2) liegt vorzugsweise zwischen 0,1 und 5,0 Gew.-%, besonders bevorzugt zwischen 0,5 und 1,5 Gew.-%. Bevorzugt sind somit die erfindungsgemäßen, vernetzbaren Abmischungen, in denen der Vernetzer (D2) von 0,1 bis 5,0 Gewichts-% enthalten ist und ein organisches Peroxid oder eine Mischung aus organischen Peroxiden darstellt.

Die Komponenten (A), (B) und (C) enthalten vorzugsweise solche Konzentrationen an polaren Siloxaneinheiten der allgemeinen Formel (1), die eine möglichst gute Mischbarkeit der einzelnen Komponenten sicherstellen und einer spontanen Auftrennung in verschiedene Phasen während der Lagerung oder bei der Applikation entgegenwirken. Sofern keine anderen polaren Reste vorhanden sind, die zu einer Angleichung der Polaritäten führen können, werden die Konzentrationen an Einheiten der allgemeinen Formel (1) vorzugsweise möglichst ähnlich hoch in allen vorhandenen Komponenten gewählt. In diesem Fall weichen die Konzentrationen der Einheiten der allgemeinen Formel (1) in den Bestandteilen der erfindungsgemäßen Abmischung möglichst nicht mehr als 60%, bevorzugt nicht mehr als 50% und besonders bevorzugt nicht mehr als 30% voneinander ab. Die im Einzelfall optimal geeigneten Konzentrationen sind in einfachen Vorversuchen durch Mischen leicht zu ermitteln.

Die beschriebenen Abmischungen können optional alle weiteren Zusatzstoffe, wie Füllstoffe (E) enthalten, die auch bisher zur Herstellung von peroxid- und additionsvernetzbaren Abmischungen eingesetzt wurden. Beispiele für verstärkende Füllstoffe, die als Komponente in den erfindungsgemäßen Siliconabmischungen eingesetzt werden können, sind pyrogene oder gefällte Kieselsäuren mit BET-Oberflächen von mindestens 50 $m^2/g$ sowie Ruße und Aktivkohlen wie Furnace-Ruß und Acetylen-Ruß, wobei pyrogene und gefällte Kieselsäuren mit BET-Oberflächen von mindestens 50 $m^2/g$ bevorzugt sind. Die genannten Kieselsäurefüllstoffe können hydrophilen Charakter haben oder nach bekannten Verfahren hydrophobiert sein. Der Gehalt der erfindungsgemäßen vernetzbaren Zusammensetzung an aktiv verstärkendem Füllstoff liegt im Bereich von 0 bis 70 Gew.-%, vorzugsweise bei 0 bis 50 Gew.-%. Besonders bevorzugt sind die vernetzbaren Siliconkautschukabmischungen dadurch gekennzeichnet, dass der Füllstoff (E) oberflächenbehandelt ist. Die Oberflächenbehandlung wird durch dem Stand der Technik bekannten Verfahren zur Hydrophobierung feinteiliger Füllstoffe erzielt. Die Hydrophobierung kann beispielsweise entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Bevorzugt verwendete Hydrophobierungsmittel sind

siliziumorganische Verbindungen, die mit der Füllstoffoberfläche unter Ausbildung kovalenter Bindungen zu reagieren vermögen oder dauerhaft an der Füllstoffoberfläche physisorbiert werden. Beispiele für Hydrophobierungsmittel sind Alkylchlorsilane, wie Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan und tert.-Butyldimethylchlorsilan; Alkylalkoxysilane, wie Dimethyldimethoxysilan, Dimethyldiethoxysilan, Trimethylmethoxysilan und Trimethylethoxysilan; Trimethylsilanol; zyklische Diorgano(poly)siloxane, wie Octamethylcyclotetrasiloxan, Dekamethylcyclopentasiloxan; lineare Diorganopolysiloxane, wie Dimethylpolysiloxane mit Trimethylsiloxy-Endgruppen sowie Dimethylpolysiloxane mit Silanol- oder Alkoxy-Endgruppen; Disilazane, wie Hexaalkyldisilazane, insbesondere Hexamethyldisilazan, Divinyltetramethyldisilazan, Bis(trifluorpropyl)tetramethyldisilazan; zyklische Dimethylsilazane, wie Hexamethylcyclotrisilazan. Es können auch Mischungen der weiter oben genannten Hydrophobierungsmittel eingesetzt werden. Um die Hydrophobierung zu beschleunigen, erfolgt gegebenenfalls auch der Zusatz von katalytisch aktiven Additiven, wie beispielsweise Aminen, Metallhydroxiden und Wasser.
Besonders bevorzugt werden zur Oberflächenbehandlung der in den erfindungsgemäßen Abmischungen eingesetzten Füllstoffe Silane, Silazane oder Siloxane mit polaren Gruppen, insbesondere siliciumgebundenen Resten $\mathbf{R^2}$ eingesetzt.

Beispiele für Silane mit polaren Resten sind:

$Cl\text{-}CH_2\text{-}Si(OCH_3)_3$, $Cl\text{-}CH_2\text{-}SiCH_3(OCH_3)_2$, $Cl\text{-}CH_2\text{-}Si(CH_3)_2OCH_3$, $Cl\text{-}CH_2\text{-}Si(CH_3)_2O$, $Cl\text{-}CH_2\text{-}SiCl_3$, $Cl\text{-}CH_2\text{-}SiCH_3Cl_2$, $Cl\text{-}CH_2\text{-}Si(CH_3)_2Cl$, $Cl\text{-}(CH_2)_3\text{-}Si(OCH_3)_3$, $Cl\text{-}(CH_2)_3\text{-}SiCH_3(OCH_3)_2$, $Cl\text{-}(CH_2)_3\text{-}Si(CH_3)_2OCH_3$, $Cl\text{-}(CH_2)_3\text{-}Si(CH_3)_2O$, $Cl\text{-}(CH_2)_3\text{-}SiCl_3$, $Cl\text{-}(CH_2)_3\text{-}SiCH_3Cl_2$, $Cl\text{-}(CH_2)_3\text{-}Si(CH_3)_2Cl$, $H_3CO\text{-}CH_2\text{-}Si(OCH_3)_3$, $H_3CO\text{-}CH_2\text{-}SiCH_3(OCH_3)_2$, $H_3CO\text{-}CH_2\text{-}Si(CH_3)_2OCH_3$.

Beispiele für Siloxane mit polaren Resten sind:

$HO\text{-}[Si(CH_3)_2O]_3[Si(CH_3)CH_2ClO]_7H$
$HO\text{-}[SiPh(CH_3)O]_6[Si(CH_3)CH_2ClO]_8H$
$HO\text{-}[Si(CH_3)(CH_2)_3ClO]_{16}HHO\text{-}[Si(CH_3)CH_2ClO]_{43}H$ $H_3CO\text{-}[Si(CH_3)_2O]_7[Si(CH_3)CH_2ClO]_{22}CH_3$
$[Si(CH_3)CH_2ClO]_3[Si(CH_3)CH_2ClO]_4$
$H_3CO\text{-}[Si(CH_3)_2O]_4[Si(CH_3)CH_2(OCH_3)O]_{12}CH_3$
$[Si(CH_3)(CH_2)_3ClO]_4[Si(CH_3)(CH_2OCH_3)ClO]_4$

Beispiele für Silazane mit polaren Resten sind:

$Cl\text{-}CH_2\text{-}Si(CH_3)_2NHSi\ (CH_3)_2CH_2\text{-}Cl$
$CH_3O\text{-}CH_2\text{-}Si(CH_3)_2NHSi(CH_3)_2CH_2\text{-}OCH_3$
$[HNSi(CH_3)CH_2Cl]_3$, $[HNSi\ (CH_3)CH_2Cl]_4$
$[HNSi(CH_3)CH_2OCH_3]_3$, $[HNSi(CH_3)CH_2OCH_3]_4$

Die Hydrophobierung kann beispielsweise in einem Schritt unter Verwendung von einem oder einer Mischung aus mehreren Hydrophobiermitteln, aber auch unter Verwendung von einem oder mehreren Hydrophobiermitteln in mehreren Schritten erfolgen. Bevorzugte Füllstoffe (E) weisen infolge einer Oberflächenbehandlung einen Kohlenstoffgehalt von mindestens 0,01 bis maximal 20 Gew.-%, bevorzugt zwischen 0,1 und 10 Gew.-%, besonders bevorzugt zwischen 0,5 bis 5 Gew.-% auf. Besonders bevorzugt sind vernetzbare Siliconkautschukabmischungen die dadurch gekennzeichnet sind, dass der Füllstoff (E) eine oberflächenbehandelte Kieselsäure, aufweisend 0,01 bis 2 Gew.-% Si-gebundene, aliphatisch ungesättigte Gruppen bedeutet. Beispielsweise handelt es sich bei diesen um Si-gebundene Vinylgruppen. In der erfindungsgemäßen Abmischung wird der Bestandteil (E) bevorzugt als einzelne oder ebenfalls bevorzugt als eine Mischung mehrerer feinteiliger Füllstoffe verwendet.

Die erfindungsgemäße Abmischung kann wahlweise als Bestandteile weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, verstärkende und nicht verstärkende Füllstoffe, antimikrobielle Additive wie z.B. Fungizide, Duftstoffe, rheologische Additive, Antistatika, hydrophilierende Additive, Korrosionsinhibitoren, Oxidationsinhibitoren, Lichtschutzmittel, flammabweisend machende Mittel und Mittel zur Beeinflussung der elektrischen Eigenschaften Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Fasern, wie Glasfasern, Kunststoffasern, Kunststoffpulver, Farbstoffe, Pigmente usw..
Diese Füllstoffe können zudem wärmeleitend sein. Beispiele für wärmeleitende Füllstoffe sind Aluminiumnitrid; Aluminumoxid; Bariumtitanat; Berylliumoxid; Bornitrid; Diamant; Kohlenstoff-Nanoröhrchen, Grafit; Magnesiumoxid; Siliziumcarbid; Wolframcarbid; Zinkoxid und eine Kombination davon. Wärmeleitende Füllstoffe sind im Stand der Technik

bekannt und im Handel erhältlich. Zum Beispiel CB-A20S und Al-43-Me sind Aluminiumoxid-Füllstoffe in verschiedenen Partikelgrößen, die im Handel bei Showa- Denko erhältlich sind, und AA-04, AA-2 und AAl 8 sind Aluminiumoxid-Füllstoffe, die im Handel bei Sumitomo Chemical Company erhältlich sind. Bornitrid-Füllstoffe sind im Handel bei Advanced Ceramics Corporation, Cleveland, Ohio, U.S.A., erhältlich.
Zu den Verstärkungsfüllstoffen gehören Silica und Kurzfasern wie beispielsweise KEVLAR-Kurzfaser®. Es können eine Kombination aus Füllstoffen mit verschiedenen Partikelgrößen und unterschiedlicher Partikelgrößenverteilung verwendet werden.

Die Siliconzusammensetzung kann weiterhin eine oder mehrere optionale Komponenten enthalten. Zu den Beispielen für optionale Komponenten gehören unter anderem (F) ein oder mehrere Lösungsmittel, (G) ein oder mehrere Inhibitoren, (H) ein oder mehrere Weichmacher.

Die Siliconzusammensetzung kann zusätzlich optional ein Lösungsmittel (F) enthalten. Es ist jedoch darauf zu achten, dass das Lösemittel keine nachteiligen Effekte auf das Gesamtsystem hat. Geeignete Lösungsmittel sind im Stand der Technik bekannt und im Handel erhältlich. Das Lösungsmittel kann beispielsweise ein organisches Lösungsmittel mit 3 bis 20 Kohlenstoffatomen sein. Zu den Beispielen für Lösungsmittel gehören aliphatische Kohlenwasserstoffe wie beispielsweise Nonan, Decalin und Dodecan; aromatische Kohlenwasserstoffe wie beispielsweise Mesitylen, Xylen und Toluol; chlorierte Kohlenwasserstoffe wie Dichlormethan und Trichlormethan; Ester wie beispielsweise Ethylacetat und Butyrolacton; Ether wie beispielsweise n-Butylether und Polyethylenglycolmonomethylether; Ketone wie beispielsweise Methylisobutylketon und Methylpentylketon; Siliconfluid wie beispielsweise lineare, verzweigte und zyklische Polydimethylsiloxane und Kombinationen aus diesen Lösungsmitteln. Die optimale Konzentration eines bestimmten Lösungsmittels in einer Formulierung kann durch Routineversuche leicht bestimmt werden. Die Menge des Lösungsmittels kann zwischen 0 und 95 % bzw. zwischen 1 und 95 % liegen.

Inhibitoren und Stabilisatoren (G) dienen der gezielten Einstellung der Verarbeitungszeit, Anspringtemperatur und Vernetzungsgeschwindigkeit der erfindungsgemäßen Siliconzusammensetzungen. Diese Inhibitoren und Stabilisatoren (G) sind auf dem Gebiet der additionsvernetzenden Abmischungen sehr gut bekannt. Beispiele gebräuchlicher Inhibitoren (G) sind acetylenische Alkohole, wie 1-Ethinyl-1-cyclohexanol, 2-Methyl-3-butin-2-ol und 3,5-Dimethyl-1-hexin-3-ol, 3-Methyl-1-dodecin-3-ol, Polymethylvinylcyclosiloxane wie 1,3,5,7-Tetravinyltetramethyltetracyclosiloxan niedermolekulare Siliconöle mit Methylvinyl-Si01/2-Gruppen und/oder R2vinylSi01/2-Endgruppen. wie Divinyltetramethydisiloxan Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfurmarat, organische Hydroperoxide wie Cumolhydroperoxid, tert-Butylhydroperoxid und Pinanhydroperoxid, organische Peroxide, organische Sulfoxide organische Amine. Diamine und Amide, Phosphane und Phosphite, Nitrile, Triazole, Diaziridine und Oxime. Die Wirkung dieser Inhibitorzusätze (G) hängt von ihrer chemischen Struktur ab, so dass die Konzentration individuell bestimmt werden muss. Inhibitoren (G) und Inhibitormischungen (G) werden vorzugsweise in einem Mengenanteil von 0,00001 % bis 5 % bezogen auf das Gesamtgewicht der Mischung zugesetzt, bevorzugt 0,00005 bis 2 % und besonders bevorzugt 0,0001 bis 1 %.

Zur Anpassung der mechanischen Eigenschaften der Mischungen und der Vulkanisate (z.B. Elastizitätsmodul) können vorzugsweise bei Raumtemperatur flüssige Verbindungen als Weichmacher (H) zugesetzt werden. Beispiele für solche Verbindungen sind lineare oder verzweigte Siloxane, die keine vernetzungsfähigen Funktionen tragen und als solche je nach Verträglichkeit mit den restlichen Komponenten der erfindungsgemäßen Mischung entweder in das Netzwerk eingelagert werden (Gel) oder ausschwitzen. Falls eine gute Verträglichkeit gewünscht ist, enthalten diese Siloxane vorzugsweise einen Anteil an Siloxaneinheiten der allgemeinen Formel (1).

Nach Vermischen aller Bestandteile liegt die dynamische Viskosität zwischen 10 mPa•s (bei 5 1/s) und 200000 Pa•s (bei 0,1 1/s), bevorzugt zwischen 100 mPa•s (bei 5 1/s) und 10000 Pa•s (bei 0,1 1/s) und besonders bevorzugt zwischen 200 mPa•S (bei 5 1/s) und 1000 Pa•s (bei 0,1 1/s), jeweils bei 25°C.

Die erfindungsgemäßen vernetzbaren Siliconabmischungen haben den Vorteil dass sie in einem einfachen Verfahren unter Verwendung leicht zugänglicher Ausgangsstoffe und damit wirtschaftlich hergestellt werden können. Die erfindungsgemäßen vernetzbaren Abmischungen haben den weiteren Vorteil, dass sie als einkomponentige Formulierung bei 25°C und Umgebungsdruck eine gute Lagerstabilität aufweisen und erst bei erhöhter Temperatur rasch vernetzen. Die erfindungsgemäßen Siliconabmischungen haben den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, also extrem lange Topfzeit zeigen, und erst bei erhöhter Temperatur rasch vernetzt.

Alle vorstehenden Symbole der vorstehenden Formeln weisen ihre Bedeutungen jeweils unabhängig voneinander auf. In allen Formeln ist das Siliciumatom vierwertig.

Die vorstehenden Viskositäten beziehen sich auf die nachstehend beschriebene Messmethode. Auch in den Beispielen wurden die Viskositäten an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wurde. Die Kalibrierung des Gerätes erfolgte mit Normalöl 10000 der Physikalisch-Technischen Bundesanstalt. Die Messtemperatur beträgt 25,00°C +/- 0,05°C, die Messzeit 3 min. Die Viskositätsangabe stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wurde in Abhängigkeit von der Viskosität gewählt und wird für jede Viskositätsangabe separat ausgewiesen.

Die Messung der dielektrischen Eigenschaften der unvernetzten Komponenten erfolgte an einem DIANA-Messgerät (Dielektrischer Analysator) von der Firma Lemke Diagnostics. Die Messzelle war von der Firma Haefely Trench AG: Type 2903. Bedingungen waren jeweils Raumtemperatur, 50Hz und 1000V. Die Messung der Durchschlagspannung wurde in Anlehnung an DIN 57370 bzw. VDE 0370 an einem Dieltest DTA 100 der Firma Baur durchgeführt (Elektrodenabstand 2,5 mm ± 0,02 mm, Angabe = Mittelwertbildung aus 6 Einzelmessungen).
Die Messung der dielektrischen Eigenschaften an den Vulkanisatfolien erfolgte am 4192A LF Impedance Analyzer von Hewlett-Packard im Bereich von 5 Hz bis 13 MHz. Hierzu wurden an einer 100 μm dicken, vernetzten Siliconfolie mit Hilfe von PVD (physical vapor deposition) gegenüberliegende 100nm dünne Silber-Elektroden mit einem Durchmesser von 49 mm aufgetragen und der Mittelwert aus 10 Versuchen errechnet.

**A) Beispiele zur Medienbeständigkeit:**

**Herstellungsbeispiel A1a:**

**Vinyldimethylsiloxy-endständiges Polysiloxan $OSi(CH_3)CH_2Cl : OSi(CH_3)_2$ = 50 : 50, Kettenlänge 44**

In einem mit Stickstoff inertisierten 41-5-Hals-Rundkolben mit Flügelrührer, Tropftrichter, Thermometer und Rückflusskühler werden 1092 g (6,68 mol) Chlormethylmethyldichlorsilan, 1119,2 g (8,683 mol) Dimethyldichlorsilan und 120,7 g (1,002 mol) Vinyldimethylchlorsilan auf 30°C temperiert. Unter Rühren werden binnen 8h 685,3 g (38,07 mol) vollentsalztes Wasser so zugetropft, dass die Temperatur der Reaktionsmischung 50°C nicht übersteigt. Anschließend wird bei 40°C zwei Stunden nachgerührt. Das freigesetzte HCl-Gas wird zur Neutralisation in einen mit Natronlauge beaufschlagten Wäscher geleitet. Die Mischung wird danach bis 105,5°C Kopftemperatur ausgeheizt. Nach Abkühlen auf 23°C werden 244,5 g 10%iger wässriger Ammoniumacetatlösung zugesetzt. Man lässt 90 Minuten rühren und heizt danach bei 1 hPa flüchtige Bestandteile bis 270°C Sumpftemperatur aus. Der Rückstand wird in einer Drucknutsche (Filter: Beko KD3) filtriert. Man isoliert 883,2 g eines klaren Öls, das nach 29Si- und 1H-NMR folgende Zusammensetzung aufweist:

$H_2C=CH\text{-}Si(CH_3)_2O_{1/2} : OSi(CH_3)CH_2Cl : OSi(CH_3)_2$ = 1 : 10,4 : 10,6 nD(25°C) : 1,4389, Dichte: 1,1264 g/ml
$\varepsilon_r$ = 13,1 (23°C, 50 Hz),
Oberflächenspannung (25°C) 27,33 mN/m SEC Mw 11.600 g/mol, Mn 3.600 g/mol, D = 3,22

**Herstellungsbeispiel A1b :**

**Si-H funktioneller Polysiloxan-Vernetzer mit Chlormethyl-Gruppen ($OSiCH_2ClCH_3 : OSi(CH_3)_2 : OSi(CH_3)H : {}_{1/2}OSi(CH_3)_3$ = 9,3 : 6,2 : 17,9 : 2; Kettenlänge 35,4; 0,66 Gew.-% H (Si-gebunden))**

a) Cohydrolyse von Chlormethylmethyldichlorsilan, Trimethylchlorsilan und Dimethyldichlorsilan

In einem mit Stickstoff inertisierten 21-5-Hals-Rundkolben mit Flügelrührer, Thermometer, Rückflusskühler und Tropftrichter werden zu einer auf 30°C temperierten Mischung aus 588 g (3,6 mol) Chlormethylmethyldichlorsilan, 108,3 g (1 Mol) Trimethylchorsilan und 257,5 g (2 Mol) Dimethyldichlorsilan binnen 7 Stunden 219,4 g vollentsalztes Wasser zudosiert. Das entstehende Chlorwasserstoffgas wird in einen Abgaswäscher abgeleitet. Man erhitzt 2 Stunden auf Rückfluss (110°C) und destilliert anschließend bei 3 hPa bis 250°C Sumpftemperatur flüchtige Bestandteile ab. Als Rückstand verbleiben 369,5 g einer klaren, farblosen Flüssigkeit, die nach $^{29}$Si- und $^{1}$H-NMR-Spektrum folgende Zusammensetzung aufweist (="Hydrolysat a)"):

$$[Cl\text{-}CH_2)(CH_3)SiO]_{17,8}[(CH_3)_2SiO]_{8,2}[(CH_3)_3SiO_{1/2}]_2$$

b) Äquilibrierung des Chlormethylmethyldimethylpolysiloxans aus

a) mit Siliconöl AK10 und H-Siloxan

In einem mit Stickstoff inertisierten 11-4-Hals-Rundkolben mit Flügelrührer, Tropftrichter, Thermometer und Destillationsaufsatz werden 360 g des Chlormethylmethyldimethylpolysiloxans aus a) vorgelegt und unter Rühren auf 100°C aufgeheizt. Anschließend gibt man eine Mischung aus 313,5 g WACKER® H-Siloxan und 57,5 g WACKER®

AK10 Siliconöl zu sowie 1,5 g einer 10%igen Lösung von Äquilibrierkatalysator "PNCl2" in Ethylacetat (wie beschrieben in DE4317978, Beispiel 1). Man rührt 2 Stunden bei 100°C und legt danach für 5 Minuten 50 hPa Vakuum an. Die Zugabe von jeweils 1,5 g PNCl2-Katalysator wir zweimal nach jeweils 2h Reaktionszeit bei 100°C wiederholt. Man kühlt auf 50°C ab, gibt 35 g einer 10%igen wässrigen Ammoniumacetat-Lösung zur Reaktionsmischung, rührt 30 Minuten bei 30°C und destilliert unter Vakuum (1 hPa) bis 150°C flüchtige Bestandteile ab. Der abgekühlte opaleszierende Rückstand wird über eine Druckfilternutsche filtriert (Seitz-EK® Filter). Man isoliert 653 g eines klaren, farblosen Öls, das eine Dichte von 1,076 g/ml [20°C] und nach $^{29}$Si- und $^{1}$H-NMR-Spektrum folgende mittlere Formel aufweist:

$$[(Cl\text{-}CH_2)(CH_3)SiO]_{9,3}[(CH_3)_2SiO]_{6,2}[(CH_3)HSiO]_{17,9}[(CH_3)_3SiO_{1/2}]_2$$

**Herstellung Siliconelastomere**

**Beispiel A2a (Vergleichsbeispiel)**

42,6 g eines vinyldimethylsiloxy-terminierten Polydimethylsiloxanes mit einer kinematischen Viskosität von 103 mm$^2$/s (25°C; DIN 51562; WACKER CHEMIE AG) werden mit 0,07 g Speier-Katalysator (1 Gew.-%ige Lösung von Hexachloroplatinsäure-Hexahydrat in Isopropanol) und 1,7 g 1,3,5,7-Tetramethylcyclotetrasiloxan (ABCR GmbH & Co.KG; Gelest) bei Raumtemperatur vermischt. Die Mischung wird anschließend in eine Teflon® Schale gegossen und 2 Stunden bei 100°C in einem Umlufttrockenschrank vernetzt. Man erhält ein 6 mm dicke Siliconelastomerplatte mit einer Härte Shore A (DIN 53505) von 10,3 und einer Dichte von 1,06 g/cm$^3$ (23°C; ISO 2781).

**Beispiel A2b (erfindungsgemäß)**

42,0 g Polysiloxan aus Beispiel A1a werden mit 0,07 g Speier-Katalysator (1 Gew.-%ige Lösung von Hexachloroplatinsäure-Hexahydrat in Isopropanol) und 2,35 g 1,3,5,7-Tetramethylcyclotetrasiloxan (ABCR GmbH & Co.KG; Gelest) bei Raumtemperatur vermischt. Die Mischung wird anschließend in eine Teflon® Schale gegossen und 2 Stunden bei 100°C in einem Umlufttrockenschrank vernetzt. Man erhält ein Siliconelastomer mit einer Härte Shore A (DIN 53505) von 9,0 und einer Dichte von 1,13 g/cm$^3$ (23°C; ISO 2781).

**Beispiel A2c (erfindungsgemäß)**

38,92 g Polysiloxan aus Beispiel A1a) werden mit 0,07 g Speier-Katalysator (1 Gew.-%ige Lösung von Hexachloroplatinsäure-Hexahydrat in Isopropanol) und 5,45 g Polymer aus Beispiel A1b bei Raumtemperatur vermischt. Die Mischung wird anschließend in eine Teflon® Schale gegossen und 2 Stunden bei 100°C in einem Umlufttrockenschrank vernetzt. Man erhält ein Siliconelastomer mit einer Härte Shore A (DIN 53505) von 23,4 und einer Dichte von 1,13 g/cm$^3$ (23°C; ISO 2781).

Die Bestimmung der Volumenquellung erfolgt, indem aus den 6 mm dicken Siliconelastomerplatten zylinderförmige Probekörper mit einem Durchmesser von 6 mm ausgestanzt werden (5 Stück je Material). Die Probekörper eines Materials werden jeweils in 100 ml des jeweiligen Lösungsmittels gegeben und bei Raumtemperatur eine Woche im geschlossenen Glasgefäß gelagert. Nach Ablauf der Lagerzeit wird der Probekörper entnommen, rasch mit saugfähigem Papier abgetupft und unverzüglich gewogen. Die Bestimmung der prozentualen Volumenquellung Qv eines Materials erfolgt durch Mittelwertbildung der an den 5 Probekörpern gemäß der Formel

Qv = [(Massezunahme des Probekörpers)/(Dichte des Lösungsmittels)] x [(Dichte des ungequollenen Probekörpers)/(Masse des ungequollenen Probekörpers)] x 100%

bestimmten Werte.

**Tabelle 1: Volumenquellung**

| Lösungsmittel | Dichte Lösungsmittel [g/cm$^3$] | Volumenquellung Qv [%] | | |
|---|---|---|---|---|
| | | Beispiel A2a*) | Beispiel A2b | Beispiel A2c |
| n-Heptan | 0, 68 | 775 | 143 | 96 |
| Cyclohexan | 0,78 | 801 | 182 | 113 |

(fortgesetzt)

| Lösungsmittel | Dichte Lösungsmittel [g/cm$^3$] | Volumenquellung Qv [%] | | |
|---|---|---|---|---|
| | | Beispiel A2a*) | Beispiel A2b | Beispiel A2c |
| Toluol | 0, 87 | 521 | 219 | 133 |
| Chloroform | 1, 48 | 753 | 270 | 159 |
| 2-Butanon | 0,81 | 224 | 199 | 123 |
| Tetrahydrofura n | 0,89 | 808 | 272 | 154 |
| *) nicht erfindungsgemäß | | | | |

Wie die Werte in Tabelle 1 zeigen, weisen die chlormethylhaltigen Siliconelastomere eine erheblich niedrigere Quellung in Lösungsmitteln auf.

**B) Beispiele zu den besonderen dielektrischen Eigenschaften der Vulkanisate der erfindungsgemäßen Mischungen**

**Beispiel B1 :**

Herstellung der **Grundmischung 1 (GM 1):**

In einem Kneter mit dem Volumen 200 ml werden 78,0 g α,ω-Dimethylvinylsilyl-endblockiertes Chlormethylmethylpolysiloxan mit einer mittleren Kettenlänge von 220 vorgelegt (Vinylgehalt 0,082 mmol/g, $\varepsilon_r$ = 7,4 (23°C, 50 Hz)). Bei Raumtemperatur werden innerhalb 35 Minuten 78,0 g mit Trimethylsilylgruppen vorhydrophobierte pyrogene Kieselsäure mit einer BET-Oberfläche von 130 m$^2$/g nach DIN EN ISO 9277 eingeknetet. Dabei entsteht eine hochviskose Masse, welche im Kneter eine Stunde bei 150°C wärmebehandelt wird. Nach dem Abkühlen auf etwa 50 °C werden 78,0 g des oben genannten Polymers zugegeben, um den Kieselsäureanteil auf 33,3 % einzustellen. Die dynamische Viskosität beträgt bei 25 °C und einer Scherrate von 1 s$^{-1}$ 380000 mPa•s.

**Herstellung der zweikomponentigen, additionsvernetzenden Zusammensetzung 1:**

Zur Herstellung der **Komponente A** werden zu 100 g der **Grundmischung 1** 3,22 g eines linearen Kammvernetzers K1, im Mittel bestehend aus 59,4 Mol-% Chlormethyl-methylsiloxy- und 40,6 Mol-% Hydrogenmethylsiloxyeinheiten mit einer mittleren Kettenlänge über alle Einheiten von 60 zugegeben. Der Si-H-Gehalt des Vernetzers beträgt 4,4 mmol/g.

Zur Herstellung der **Komponente B** werden zu 100 g der Grundmischung 10,08 g 1-Ethinylcyclohexanol (=Inhibitor) und 20 ppm eines Platin-Divinyldisiloxankomplexes (= Karstedt-Katalysator, 20 ppm bezogen auf das Metall Pt) zugegeben und mit einem Flügelrührer 10 Minuten bei einer Drehzahl von 200 U/min bei Raumtemperatur gerührt.

Durch Verrühren (Raumtemperatur, Flügelrührer, 10 min bei ca. 200 U/min) der beiden Komponenten A und B im Verhältnis 1:1 wird eine vernetzbare Mischung hergestellt, dessen Si-H/Si-Vinyl-Verhältnis bei 1,3 liegt. Die Vulkanisation erfolgt bei 160 °C im Trockenschrank, Dauer 20 min.

Die Härte des Vulkanisats liegt bei 35 Shore A nach ISO 868, der Weiterreiß-widerstand nach ASTM D 624 B ist 4,3 N/mm, die Reißdehnung nach ISO 37 ist 200 %, Reißfestigkeit nach ISO 37 ist 2,0 N/mm$^2$.

Bei einer Schichtdicke von 100 μm liegt die Durchschlagsspannung nach ASTM D 3755 bei 50 kV/mm. Die relative Permittivität $\varepsilon_r$ bei 10 Hz liegt bei 1200, die Permittivität $\varepsilon_r$ bei 100 kHz liegt bei 6,8.

**Beispiel B2:**

Herstellung der **Grundmischung 2 (GM 2):**

Die Abkürzung CMM steht in für Chlormethylmethyl. In einem Kneter mit dem Volume 200 ml werden 60,0 g α,ω-Dimethylvinylsilyl-endblockiertes Chlormethylmethylsiloxan-Dimethylsiloxan-copolymer ($OSi(CH_3)CH_2Cl$ : $OSi(CH_3)_2$ = 73:27, $\varepsilon_r$ = 16,9 (23°C, 50 Hz) mit einer mittleren Kettenlänge von 278 vorgelegt (Vinylgehalt 0,072 mmol/g). Bei Raumtemperatur werden innerhalt 35 Minuten 60,0 g mit Trimethylsilylgruppen vorhydrophobierte pyrogene Kieselsäure mit einer BET-Oberfläche von 130 m$^2$/g nach DIN EN ISO 9277 eingeknetet. Dabei entsteht eine hochviskose Masse, welche im Kneter eine Stunde bei 150°C wärmebehandelt wird. Nach dem Abkühlen auf

etwa 50 °C werden weitere 60,0 g des oben genannten Polymers zugegeben, um den Kieselsäureanteil auf 33,3 % einzustellen. Die dynamische Viskosität beträgt bei 25 °C und einer Scherrate von 1 $s^{-1}$ 160.000 mPa·s.

**Herstellung der zweikomponentigen, additionsvernetzenden Zusammensetzung 1:**

Zur Herstellung der Komponente A werden zu 100 g der Grundmischung 1 2,9 g eines linearen Kammvernetzers K1, im Mittel bestehend aus 59,4 Mol-% Chlormethyl-methylsiloxy-, und 40,6 Mol-% Hydrogenmethylsiloxyeinheiten mit einer mittleren Kettenlänge über alle Einheiten von 60 Zugegeben. Der Si-H-Gehalt des Vernetzers beträgt 4,4 mmol/g.

Zur Herstellung der Komponente B werden zu 100 g der Grundmischung 10,08 g 1-Ethinylcyclohexanol (=Inhibitor) und 20 ppm eines Platin-Divinyldisiloxankomplexes (= Karstedt-Katalysator, 20 ppm bezogen auf das Metall Pt) zugegeben und mit einem Flügelrührer 10 Minuten bei einer Drehzahl von 200 U/min bei Raumtemperatur gerührt.

Durch Verrühren (RT, Flügelrührer, 10 min bei ca. 200 U/min) der beiden Komponenten A und B im Verhältnis 1:1 wird eine vernetzbare Mischung hergestellt, deren Si-H/Si-Vinyl-Verhältnis bei 1,3 liegt. Die Vulkanisation erfolgt bei 160 °C im Trockenschrank, Dauer 20 min.

Die Härte des Vulkanisats liegt bei 20 Shore A nach ISO 868, der Weiterreißwiderstand nach ASTM D 624 B ist 0,5 N/mm, die Reißdehnung nach ISO 37 ist 100 %, Reißfestigkeit nach ISO 37 ist 2,0 $N/mm^2$. Bei einer Schichtdicke von 100 $\mu$m liegt die Durchschlagsspannung nach ASTM D 3755 bei 60 kV/mm. Die relative Permittivität $\varepsilon_r$ bei 10 Hz liegt bei 1300, die Permittivität $\varepsilon_r$ bei 100 kHz liegt bei 6,0.

**Beispiel B3:**

Herstellung der **Grundmischung 3 (GM 1):**

In einem Kneter mit dem Volume 200 ml werden 67,9 g $\alpha,\omega$-Dimethylvinylsilyl-endblockiertes Chlormethylmethylpolysiloxan mit einer mittleren Kettenlänge von 220, 1,21 g 1,3-Bis(chloromethyl)-1,1,3,3-tetramethyldisilazan (Aldrich), 0,84 g Hexamethyldisilazan und 0,82 g entionisiertes Wasser vorgelegt (Vinylgehalt des Polymers 0,082 mmol/g, $\varepsilon_r$ = 7,4 (23°C, 50 Hz)). Bei Raumtemperatur werden innerhalb 25 Minuten 47,9 g mit pyrogene Kieselsäure mit einer BET-Oberfläche von 130 $m^2/g$ nach DIN EN ISO 9277 eingeknetet (HDK® S13). Dabei entsteht eine hochviskose Masse, welche im Kneter eine Stunde bei 150°C und einem Vakuum von 20 mbar wärmebehandelt wird. Nach dem Abkühlen auf etwa 110 °C werden 50,1 g des oben genannten Polymers zugegeben. Nach 10 min. Knetzeit wird 1,0 g VE-Wasser zugegeben und eine Stunde bei 150 °C bei einem Vakuum von 20 mbar geknetet. Die dynamische Viskosität beträgt bei 25 °C und einer Scherrate von 2 $s^{-1}$ 73.000 mPa·s.

**Herstellung der zweikomponentigen, additionsvernetzenden**

**Zusammensetzung 1:**

Zur Herstellung der **vernetzbaren Mischung** werden zu 124 g der **Grundmischung 3 3,9** g eines linearen Kammvernetzers K1, im Mittel bestehend aus 59,4 Mol-% Chlormethyl-methylsiloxy- und 40,6 Mol-% Hydrogenmethylsiloxyeinheiten mit einer mittleren

Kettenlänge über alle Einheiten von 60 Zugegeben. Der Si-H-Gehalt des Vernetzers beträgt 4,4 mmol/g. Nach Zugabe von 0,05 g 1-Ethinylcyclohexanol werden 10 ppm (bezogen auf das Metall) eines Platinkatalysators (=Karstedt-Katalysator) zugegeben und 10 min bei Raumtemperatur mit Hilfe eines Flügelrührers bei einer Drehzahl von 200 U/min verrührt.

Die Vulkanisation erfolgt durch Verpressen bei 180 °C in einer Pressform, Dauer 20 min.

Die Härte des Vulkanisats liegt bei 47 Shore A nach ISO 868, der Weiterreißwiderstand nach ASTM D 624 B ist 7,7 N/mm, die Reißdehnung nach ISO 37 ist 150 %, Reißfestigkeit nach ISO 37 ist 5,2 $N/mm^2$.

Bei einer Schichtdicke von 100 $\mu$m liegt die

Durchschlagsspannung nach ASTM D 3755 bei 50 kV/mm. Die relative Permittivität $\varepsilon_r$ bei 10 Hz liegt bei 1200, die Permittivität $\varepsilon_r$ bei 100 kHz liegt bei 6,8.

**Herstellung des linearen Kammvernetzers K1:**

**Si-H funktioneller Polysiloxan-Vernetzer mit Chlormethyl-Gruppen ($OSiCH_2ClCH_3$ : $OSi(CH_3)H$ : $_{1/2}OSi(CH_3)_3$ = 33,6 : 23 : 2; Kettenlänge ~60; 0,44 Gew.-% H (Si-gebunden))**

a) Cohydrolyse von Chlormethylmethyldichlorsilan, Trimethylchlorsilan und Dimethyldichlorsilan

In einem mit Stickstoff inertisierten 4l-5-Hals-Rundkolben mit Flügelrührer, Thermometer, Rückflusskühler und Tropftrichter werden unter Rühren zu einer auf 30°C temperierten Mischung aus 1600 g (9,79 Mol) Chlormethylmethyldichlorsilan und 79,7 g (0,734 Mol) Trimethylchorsilan binnen 5 Stunden 438,6 g vollentsalztes Wasser zudosiert. Das entstehende Chlorwasserstoffgas wird in einen Abgaswäscher abgeleitet. Man lässt 2 Stunden bei 40°C nachreagieren und destilliert anschließend zunächst bei Normaldruck bis 155°C Sumpftemperatur, dann bei 100°C und 2 hPa flüchtige Bestandteile ab. Nach Abkühlen auf 30°C werden 156,5 g 10%ige wässrige Ammoniumacetat-Lösung zugegeben. Man rührt eine Stunde bei 30°C, legt anschließend Vakuum an und destilliert bei 1 hPa bis 240°C Sumpftemperatur (176°C Kopftemperatur) flüchtige Bestandteile ab. Der Rückstand wird mittels Drucknutsche über ein Filter mit Maschenweite 0,25-0,35 μm filtriert. Man isoliert 766,5 g einer klaren, farblosen Flüssigkeit, die nach $^{29}Si$- und $^{1}H$-NMR-Spektrum folgende Zusammensetzung aufweist:

$$[Cl\text{-}CH_2)(CH_3)SiO]_{39}[(CH_3)_3SiO_{1/2}]_{1,6}[HO(CH_3)_2SiO_{1/2}]_{0,4}$$

b) Äquilibrierung des Chlormethylmethyldimethylpolysiloxans aus

a) mit H-Siloxan

In einem mit Stickstoff inertisierten 21-4-Hals-Rundkolben mit Flügelrührer, Tropftrichter, Thermometer und Destillationsaufsatz wird eine Mischung aus 555 g des Chlormethylmethylpolysiloxans aus a) und 239,1 g WACKER® H-Siloxan vorgelegt und unter Rühren auf 100°C aufgeheizt. Anschließend gibt man 1,77 ml einer 10%igen Lösung von Äquilibrierkatalysator "PNCl2" in Ethylacetat zu (wie beschrieben in DE4317978, Beispiel 1). Man rührt 2 Stunden bei 100°C und legt danach für 5 Minuten 50 hPa Vakuum an. Die Zugabe von jeweils 1,77 ml PNCl2-Katalysator wir zweimal nach jeweils 2h Reaktionszeit bei 100°C wiederholt. Man kühlt auf 50°C ab, gibt 36,5 g einer 10%igen wässrigen Ammoniumacetat-Lösung zur Reaktionsmischung, rührt 30 Minuten bei 30°C und destilliert unter Vakuum (1 hPa) bis 170°C flüchtige Bestandteile ab. Der abgekühlte Rückstand wird über eine Druckfilternutsche filtriert (Seitz-EK® Filter, 0,3-0,5 μm). Man isoliert 714,8 g eines klaren, farblosen Öls, das nach $^{29}Si$- und $^{1}H$-NMR-Spektrum folgende mittlere Formel aufweist:

$$[(Cl\text{-}CH_2)(CH_3)SiO]_{33,6}[(CH_3)HSiO]_{23}[(CH_3)_3SiO_{1/2}]_2$$

Relative Permittivität: $\varepsilon_r$ = 5,8 (23°C, 50 Hz)

## Patentansprüche

1. . Zu Vulkanisaten vernetzbare Abmischungen, die mindestens eine Verbindung enthalten, die mindestens eine Einheit der allgemeinen Formel 1

$$R^1_aR^2_bSiO_{(4-a-b)/2} \quad (1)$$

enthält, wobei

$R^1$ einen einwertigen $C_1$-$C_{20}$-Kohlenwasserstoffrest
$R^2$ einen Rest $-CR^3R^4-X$ und
X einen Rest -I, -CN, $-NO_2$ bedeuten,
$R^3$, $R^4$ Wasserstoff bedeuten, oder die gleiche Bedeutung haben wie $R^1$,
a die Werte 0, 1 oder 2,
b die Werte 1, 2 oder 3,
c und d die Werte 0 oder 1 und
e die Werte 0 oder 1 bedeuten
mit der Maßgabe, dass a + b ≤ 3,
die Verbindung (A) und Verbindung (B) enthalten, wobei Verbindung (A) mindestens zwei aliphatisch ungesättigte Reste aufweist und (B) mindestens drei Si-gebundene Wasserstoffatome aufweist, oder Verbindung (A) mindestens drei aliphatisch ungesättigte Reste aufweist und Siloxan (B) mindestens zwei Si-gebundene Wasserstoffatome aufweist; oder die Siloxan (C) alleine oder zusätzlich zu Verbindung (A) oder zusätzlich zu Verbindung (B) oder zusätzlich zu Verbindung (A) und (B) enthalten, welches mindestens drei Reste aufweist, die ausgewählt werden aus aliphatisch ungesättigten Resten und Si-gebundenem Wasserstoffatom.

**2.** . Abmischungen nach Aspruch 1, bei denen mindestens 10%, aller in der Abmischung vorhandenen Siloxaneinheiten Einheiten der allgemeinen Formel (1) sind.

**3.** . Abmischungen nach einem der vorangehenden Ansprüche, bei denen $R^1$ 1 bis 6 Kohlenstoffatome aufweist.

**4.** . Abmischungen nach einem der vorangehenden Ansprüche, bei denen $R^3$ und $R^4$ den Wasserstoffrest bedeuten.

**5.** . Abmischungen nach einem der vorangehenden Ansprüche, bei denen die Verbindung (A) eine Organosiliciumverbindung (A) ist, die aufgebaut ist aus Einheiten der allgemeinen Formel (2)

$$R^{20}{}_fR^{21}gSiO_{(4-f-g)/2} \qquad (2),$$

wobei

$R^{20}$ einen einwertigen oder mehrwertigen Rest $R^a$ oder $R^b$,
$R^{21}$ einen einwertigen, SiC-gebundenen Kohlenwasserstoffrest mit mindestens einer aliphatischen Kohlenstoff-Kohlenstoff-Mehrfachbindung,
$R^a$ einen von aliphatischen Kohlenstoff-Kohlenstoff-Mehrfachbindungen freien, einwertigen $C_1$-$C_{18}$-Kohlenwasserstoffrest.
$R^b$ einen Rest der allgemeinen Formel (3)

$$-(Q^b)\text{-}Y, \qquad (3)$$

$Q^b$ einen unsubstituierten oder substituierten zweiwertigen $C_2$-$C_{18}$-Kohlenwasserstoffrest,
Y einen Rest F, Cl, Br, I, $CF_3$, OOC-R'OR', $[O(CH_2)_{q1}]_o(OCH(CH_3)(CH_2)_{q2}]_p$-Z, -CN, -$OR^{22}$, -$NR^{33}$ -, -$NR^{22}{}_2$, -$NR^{33}$-C(O)-$NR^{22}{}_2$, -C(O)-$NR^{22}{}_2$, -C(O)$R^{22}$, -C(O)O$R^{22}$, -$SO_2$-Ph oder -$C_6F_5$,
$R^{22}$ unabhängig voneinander, einen einwertigen Kohlenwasserstoffrest mit 1 bis 20 Kohlenstoffatomen,
Ph den Phenylrest,
Z einen Rest -OH, -O-R' oder -OOC-R',
R' die Bedeutung von $R^a$,
f die Werte 0, 1, 2 oder 3,
g die Werte 0, 1 oder 2,
q1 und q2 unabhängig voneinander die Werte 1, 2, 3 oder 4 und
o und p unabhängig voneinander Zahlen von 0 - 80 bedeuten, mit der Maßgabe, dass die Summe f + g kleiner oder gleich 3 ist,
dass mindestens 2 Reste $R^{21}$ je Molekül vorliegen, dass zwischen Y und dem St-Atom ein Abstand von mindestens 2 Kohlenstoffatomen besteht und dass $o + p \geq 1$.

**6.** . Abmischungen nach Anspruch 5, bei denen $R^{20}$ ein einwertiger, von aliphatischen Kohlenstoff-Kohlenstoff-Mehrfachbindungen freier, SiC-gebundener Kohlenwasserstoffrest mit 1 bis 6 Kohlenstoffatomen ist.

**7.** . Abmischungen nach einem der vorangehenden Ansprüche, bei denen die Verbindung (B) eine Organosiliciumverbindung (B) ist, die aufgebaut ist aus Einheiten der allgemeinen Formel
(4)

$$R^{20}H_iSiO_{(4-h-1)/2} \qquad (4),$$

wobei

$R^{20}$ die in Anspruch 5 angegebenen Bedeutungen hat
h 0, 1 2 oder 3 ist und
i 0, 1 oder 2 ist,

mit der Maßgabe, dass die Summe von h + i kleiner oder gleich 3 ist und mindestens zwei Si gebundene Wasserstoffatome je Molekül vorliegen.

**8.** . Abmischungen, nach einem der vorangehenden Ansprüche, bei denen die Verbindung (C) ein Siloxan (C) ist, das aufgebaut ist aus Einheiten der allgemeinen Formeln (2) und (4) mit der Maßgabe, dass je, Molekül mindestens 2 Reste $R^{21}$ und mindestens 2 Si-gebundene Wasserstoffatome vorliegen.

**9.** . Abmischungen, nach einem der vorangehenden Ansprüche, die über organische Peroxide (D2) vernetzbar sind, welche mindestens die Komponente (A) gemäß einem der vorangehenden Ansprüche und (D2) enthalten.

## Claims

**1.** Mixtures that are crosslinkable to give vulcanizates, which mixtures comprise at least one compound which contains at least one unit of the general formula 1

$$R^1_aR^2_bSiO_{(4-a-b)/2} \quad (1)$$

where

**$R^1$** is a monovalent $C_1$-$C_{20}$-hydrocarbon radical,
**$R^2$** is a radical $-CR^3R^4-X$ and
**X** is a radical -I, -CN, $-NO_2$,
**$R^3$, $R^4$** are hydrogen, or have the same meaning as **$R^1$,**
**a** has the value 0, 1 or 2,
**b** has the value 1, 2 or 3,
**c** and **d** have the value 0 or 1 and
**e** has the value 0 or 1,
with the proviso that **a** + **b** $\leq$ 3,
which comprise compound (A) and compound (B), where compound (A) has at least two aliphatically unsaturated radicals and (B) has at least three Si-bonded hydrogen atoms, or compound (A) has at least three aliphatically unsaturated radicals and siloxane (B) has at least two Si-bonded hydrogen atoms; or which comprise siloxane (C) on its own or in addition to compound (A) or in addition to compound (B) or in addition to compound (A) and (B) which has at least three radicals which are selected from aliphatically unsaturated radicals and Si-bonded hydrogen atom.

**2.** Mixtures according to Claim 1, in which at least 10% of all of the siloxane units present in the mixture are units of the general formula (1).

**3.** Mixtures according to one of the preceding claims, in which $R^1$ has 1 to 6 carbon atoms.

**4.** Mixtures according to one of the preceding claims, in which **$R^3$** and **$R^4$** are the hydrogen radical.

**5.** Mixtures according to one of the preceding claims, in which the compound (A) is an organosilicon compound (A) which is composed of units of the general formula (2)

$$R^{20}_fR^{21}_gSiO_{(4-f-g)/2} \quad (2),$$

where

**$R^{20}$** is a monovalent or polyvalent radical **$R^a$** or **$R^b$,**
**$R^{21}$** is a monovalent, SiC-bonded hydrocarbon radical with at least one aliphatic carbon-carbon multiple bond,
**$R^a$** is a monovalent $C_1$-$C_{18}$-hydrocarbon radical free from aliphatic carbon-carbon multiple bonds,
**$R^b$** is a radical of the general formula (3)

$$-(Q^b)-Y, \quad (3)$$

**$Q^b$** is an unsubstituted or substituted divalent $C_2$-$C_{18}$-hydrocarbon radical,

**Y** is a radical F, Cl, Br, I, $CF_3$, OOC-R'OR', $[O(CH_2)_{q1}]_o[OCH(CH_3)(CH_2)_{q2}]_p$-Z, -CN, $-OR^{22}$, $-NR^{22}$-, - $NR^{22}_2$, $-NR^{22}$-C(O)-$NR^{22}_2$, -C(O)-$NR^{22}_2$, -C(O)$R^{22}$,-C(O)O$R^{22}$, -S02-Ph or $-C_6F_5$,
**$R^{22}$** independently of one another, is a monovalent hydrocarbon radical having 1 to 20 carbon atoms,
**Ph** is the phenyl radical,
**Z** is a radical -OH, -O-R' or -OOC-R',
**R'** has the meaning of **$R^a$,**
**f** has the value 0, 1, 2 or 3,
**g** has the value 0, 1 or 2,

**q1** and **q2,** independently of one another, have the values 1, 2, 3 or 4 and
**o** and **p,** independently of one another, are numbers from 0-80,
with the proviso that the sum **f + g** is less than or equal to 3,
that at least two radicals **$R^{21}$** are present per molecule,
that between **Y** and the Si atom there is a distance of at least two carbon atoms and
that **o** + **p** $\geq$ 1.

6. Mixtures according to Claim 5, in which **$R^{20}$** is a monovalent SiC-bonded hydrocarbon radical having 1 to 6 carbon atoms that is free from aliphatic carbon-carbon multiple bonds.

7. Mixtures according to one of the preceding claims, in which the compound (B) is an organosilicon compound (B) which is composed of units of the general formula (4)

$$R^{20}_hH_iSiO_{(4-h-i)/2} \qquad (4),$$

where

**$R^{20}$** has the meanings given in Claim 5,
**h** is 0, 1, 2 or 3 and
**i** is 0, 1 or 2,

with the proviso that the sum of **h + i** is less than or equal to 3 and at least two Si-bonded hydrogen atoms are present per molecule.

8. Mixtures according to one of the preceding claims, in which the compound (C) is a siloxane (C) which is composed of units of the general formulae (2) and (4) with the proviso that at least two radicals **$R^{21}$** and at least two Si-bonded hydrogen atoms are present per molecule.

9. Mixtures according to one of the preceding claims, which are crosslinkable via organic peroxides (D2) which contain at least the component (A) according to one of the preceding claims and (D2).

## Revendications

1. Mélanges réticulables en produits vulcanisés, qui contiennent au moins un composé, qui contient au moins une unité de formule générale 1

$$R^1_aR^2_bSiO_{(4-a-b)/2} \qquad (1)$$

dans laquelle

$R^1$ signifie un radical hydrocarboné monovalent en $C_1$-$C_{20}$,
$R^2$ signifie un radical -$CR^3R^4$-X et
X signifie un radical -I, -CN, $-NO_2$,
$R^3$, $R^4$ signifient hydrogène ou ont la même signification que $R^1$,
a signifie les valeurs 0, 1 ou 2,
b signifie les valeurs 1, 2 ou 3,
c et d signifient les valeurs 0 ou 1 et
e signifie les valeurs 0 ou 1, à condition que a + b $\leq$ 3, contiennent le composé (A) et le composé (B), le composé

(A) présentant au moins deux radicaux aliphatiquement insaturés et (B) présentant au moins trois atomes d'hydrogène liés par Si, ou le composé (A) présentant au moins trois radicaux aliphatiquement insaturés et le siloxane (B) présentant au moins deux atomes d'hydrogène liés par Si ;
ou contiennent le siloxane (C) seul ou en plus du composé (A) ou en plus du composé (B) ou en plus du composé (A) et du composé (B), qui présente au moins trois radicaux, qui sont choisis parmi les radicaux aliphatiquement insaturés et un atome d'hydrogène lié par Si.

**2.** Mélanges selon la revendication 1, dans lesquels au moins 10% de toutes les unités siloxane présentes dans le mélange sont des unités de formule générale (1).

**3.** Mélanges selon l'une quelconque des revendications précédentes, dans lesquels $R^1$ présente 1 à 6 atomes de carbone.

**4.** Mélanges selon l'une quelconque des revendications précédentes, dans lesquels $R^3$ et $R^4$ signifient le radical hydrogène.

**5.** Mélanges selon l'une quelconque des revendications précédentes, dans lesquels le composé (A) est un composé organosilicié (A) qui est constitué par des unités de formule générale (2)

$$R^{20}_fR^{21}_gSiO_{(4-f-g)/2} \qquad (2),$$

dans laquelle

$R^{20}$ signifie un radical $R^a$ ou $R^b$ monovalent ou polyvalent,
$R^{21}$ signifie un radical hydrocarboné monovalent, lié par SiC, présentant au moins une liaison carbone-carbone aliphatique multiple,
$R^a$ signifie un radical hydrocarboné monovalent en $C_1$-$C_{18}$ exempt de liaisons carbone-carbone aliphatiques multiples,
$R^b$ signifie un radical de formule générale (3)

$$-(Q^b)-Y \qquad (3)$$

$Q^b$ signifie un radical hydrocarboné divalent, non substitué ou substitué en $C_2$-$C1_8$,
Y signifie un radical F, Cl, Br, I, $CF_3$, OOC-R'OR', $[O(CH_2)q_1]o[OCH(CH_3)\ (CH_2)q_2]_p$-Z, -CN, $-OR^{22}$, $-NR^{22}_2$,$-NR^{22}$-C(O)-$NR^{22}_2$, -C(O)-$NR^{22}_2$, -C(O)$R^{22}$, -C(O)O$R^{22}$, - $SO_2$-Ph ou -$C_6F_5$,
$R^{22}$ signifie, indépendamment, un radical hydrocarboné monovalent comprenant 1 à 20 atomes de carbone,
Ph signifie le radical phényle,
Z signifie un radical -OH, -O-R' ou -OOC-R',
R' présente la signification de $R^a$
f signifie les valeurs 0, 1, 2 ou 3,
g signifie les valeurs 0, 1 ou 2,
qlet q2 signifient, indépendamment, les valeurs 1, 2, 3 ou 4 et
o et p signifient, indépendamment, des nombres de 0-80, à condition que la somme f + g soit inférieure ou égale à 3, qu'il existe au moins 2 radicaux $R^{21}$ par molécule, qu'il existe une distance d'au moins 2 atomes de carbone entre Y et l'atome de Si et que $o + p \geq 1$.

**6.** Mélanges selon la revendication 5, dans lesquels $R^{20}$ signifie un radical hydrocarboné monovalent exempt de liaisons carbone-carbone multiples aliphatiques, lié par SiC, comprenant 1 à 6 atomes de carbone.

**7.** Mélanges selon l'une quelconque des revendications précédentes, dans lesquels le composé (B) est un composé organosilicié (B) qui est constitué par des unités de formule générale (4)

$$R^{20}_hH_iSiO_{(4-h-i)/2} \qquad (4),$$

dans laquelle

$R^{20}$ présente les significations indiquées dans la revendication 5,
h représente 0, 1, 2 ou 3 et

i représente 0, 1 ou 2, à condition que la somme de h + i soit inférieure ou égale à 3 et qu'il existe au moins deux atomes d'hydrogène liés par Si par molécule.

**8.** Mélanges selon l'une quelconque des revendications précédentes, dans lesquels le composé (C) est un siloxane (C), qui est constitué par des unités des formules générales (2) et (4), à condition qu'il existe, par molécule, au moins 2 radicaux $R^{21}$ et au moins 2 atomes d'hydrogène liés par Si.

**9.** Mélanges selon l'une quelconque des revendications précédentes, qui sont réticulables via des peroxydes organiques (D2), qui contiennent au moins le composant (A) selon l'une quelconque des revendications précédentes et (D2).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102010046343
- US 6545384 B1
- JP 49080599 B
- US 2013253146 A
- DE 4317978